# EUROPÄISCHE PATENTSCHRIFT

(11) **EP 1 453 746 B1**
(45) Veröffentlichungstag und Bekanntmachung des Hinweises auf die Patenterteilung: **21.02.2007**
(21) Anmeldenummer: 02792905.8
(22) Anmeldetag: 05.12.2002
(51) Int. Cl.: B65G 1/14, B65D 19/44, B65D 25/10

(54) **TRANSPORTGESTELL FUER AUS KUNSTSTOFF BESTEHENDE DICHTUNGSRAHMEN INSBESONDERE FUER KUEHLMOEBEL**
SHIPPING CRATE FOR PLASTIC SEALING FRAMES, ESPECIALLY FOR HOUSEHOLD REFRIGERATORS
CHASSIS DE TRANSPORT POUR CADRES D ETANCHEITE EN PLASTIQUE, EN PARTICULIER POUR REFRIGERATEURS MENAGERS

(30) Priorität: 11.12.2001 DE 10160689
(43) Veröffentlichungstag der Anmeldung: 08.09.2004
(73) Patentinhaber: REHAU AG + Co, 95111 Rehau (DE)
(72) Erfinder: RYNKIEWICZ, Andrew, Herefordshire HR9 5UD (GB); ARSLAN, Erdinc, 81110 Bostanci, Istanbul (TR)
(86) Internationale Anmeldenummer: PCT/EP2002/013793
(87) Internationale Veröffentlichungsnummer: WO 2003/053822

(56) Entgegenhaltungen:
- DE-U- 20 118 409
- DE-U- 29 805 341
- US-A- 4 811 853
- US-A- 6 109 456

## Beschreibung

Die Erfindung betrifft ein Transportgestell für aus Kunststoff bestehende Dichtungsrahmen, insbesondere für Kühlmöbel, mit einem oder mehreren oder Tragarmen zum hängenden Aufnehmen der hintereinander anzuordnenden Dichtungsrahmen.

Solche Dichtungsrahmen werden seitens des Rahmenherstellers aus biegeschlaffen Kunststoffprofilabschnitten vorgefertigt und als Fertigbauteil an den Abnehmer, z.B. einen Kühlmöbelhersteller, geliefert, der die Dichtungsrahmen dann an dem Kühlmöbel anbringt. Um die Dichtungsrahmen transportieren zu können, benutzt man ein Transportgestell, an dem ein oder mehrere horizontal angeordnete Tragarme vorgesehen sind, auf die die Dichtungsrahmen hintereinander geordnet aufgehängt werden. Beim Transportieren des Transportsgestells verrutschen nun jedoch die hintereinander angeordneten Dichtungsrahmen, was dazu führt, dass sie aneinander anliegen und gegeneinander drücken. Dies führt dazu, dass die aus dem relativ weichen Kunststoff bestehenden Dichtungsrahmen deformiert werden, d.h. die Hohlprofile werden zusammengedrückt, die speziell vorgesehenen Kammern oder Dichtwülste werden gequetscht und verringern sich in ihrem Volumen etc. Vor allem im Sommer mit hohen Umgebungstemperaturen wird das thermoplastische Material der Dichtungsrahmen sehr weich und mithin noch anfälliger gegen einwirkende Kräfte. Werden die Dichtungsrahmen beim Kühlmöbelhersteller anschließend ausgepackt, so muss dieser in der Regel die deformierten Dichtungsrahmen, die er in dieser Form nicht immer sofort verwenden kann, durch geeignete Lagerung oder Temperaturbehandlung wieder rückformen, so dass sie ihre eigentliche Querschnittsform wieder einnehmen.

Der Erfindung liegt damit das Problem zugrunde, ein Transportgestell anzugeben, das einen verbesserten Transport der in Rede stehenden Dichtungsrahmen zulässt und dass eine Beschädigung der Dichtlippen der zu transportierenden Dichtungsrahmen weder in ihrer Form und/oder an ihrer dichtwirksamen Oberfläche infolge eines Transports hervorruft.

Zur Lösung dieses Problems ist es bei einem Transportgestell der eingangs genannten Art erfindungsgemäß vorgesehen, dass der oder jeder Tragarm eine Auflage aufweist, an deren den Dichtungsrahmen zugewandten Seite mehrere jeweils einen Dichtungsrahmen aufnehmende Halteaufnahme zum Haltern der Dichtungsrahmen in einer voneinander beabstandeten Position vorgesehen sind und die Auflage fest oder lösbar am Tragarm angeordnet ist und die Halteaufnahmen als hintereinander angeordnete Eintiefungen ausgebildet sind, in die jeweils ein Dichtungsrahmen eingreift, wobei die Halteaufnahmen in ihrer Querschnittsform in Abhängigkeit der Form des an oder in ihr aufzunehmenden Rahmenabschnitts eines aufzunehmenden Dichtungsrahmens geformt ist, eine Halteaufnahme derart geformt ist, dass ein eine nach innen gerichtete Dichtlippe aufweisender Dichtungsrahmen mit seinem Dichtungskörper aufgelagert ist und die Dichtlippe im Wesentlichen unverformt in der Halteaufnahme aufgenommen ist, eine Auflage im Querschnitt im Wesentlichen U-förmig ist und eine an einem Tragarm angeordnete Auflage aus mehreren miteinander lösbar verbundenen und hintereinander angeordneten Auflageabschnitten besteht und die Auflageabschnitte mittels Steckverbindungen oder Steck-Rast-Verbindungen miteinander verbunden oder verbindbar sind.

Beim erfindungsgemäßen Transportgestell werden die Dichtungsrahmen an oder in den an der tragarmseitig vorgesehenen Auflage vorgesehenen Halteaufnahmen gehaltert und somit gegen ein Verrutschen gesichert und fixiert, so dass die Dichtungsrahmen stets in einer voneinander beabstandeten Position auch während des Transports verbleiben. Infolgedessen sind jegliche Deformationen, die bei bisher bekannten Transportgestellen aus dem möglichen Verrutschen der Dichtungsrahmen gegeneinander resultieren mit besonderem Vorteil nicht mehr möglich. Der Kühlmöbelhersteller erhält also in jedem Fall deformationsfreie Dichtungsrahmen, die er ohne weitere Maßnahmen sofort verbauen kann.

Die Auflage kann dabei fest am Tragarm angeordnet sein. Eine besonders zweckmäßige Erfindungsalternative sieht vor, dass die Auflage lösbar am Tragarm angeordnet ist. Sie kann also mithin ausgetauscht werden, was insbesondere dahingehend von besonderem Vorteil ist, als üblicherweise verschiedene Kühlmöbel unterschiedlich geformte und konfigurierte Dichtungsrahmen erhalten, mithin also seitens des Rahmenherstellers verschiedenartig geformte bzw. profilierte Dichtungsrahmen zu transportieren sind.

Die Möglichkeit des einfachen Auflagenaustausches bietet damit den besonderen Vorteil, das Transportgestell durch einfachen Auflagenwechsel optimal an die jeweils zu transportierende Rahmenart anzupassen, da die Auflagen natürlich entsprechend den geometrischen Gegebenheiten der unterschiedlichen Dichtungsrahmen unterschiedlich ausgebildet sein können. Zu diesem Zweck ist erfindungsgemäß vorgesehen, dass die Halteaufnahmen in ihrer Querschnittsform in Abhängigkeit der Form des an oder in ihr aufzunehmenden Rahmenabschnitts eines aufzunehmenden Dichtungsrahmens geformt sind, d.h. die Form der Auflage bzw. der Halteaufnahmen ist entsprechend der Querschnittsform eines speziellen Dichtungsrahmens gewählt. Zu jeder speziellen Dichtungsrahmenform gibt es eine spezielle Auflage, deren Halteaufnahmen auf diese Rahmenform abgestimmt sind, um für einen optimalen Halt zu sorgen. Die Halteaufnahmen selbst sind zweckmäßigerweise als hintereinander angeordnete Eintiefungen, in die jeweils ein Dichtungsrahmen eingreift, ausgebildet.

Bei bestimmten Dichtungsrahmenarten sind offene Kammern vorgesehen, die der Befestigung des Dichtungsrahmens am Kühlmöbel dienen. Solche Dichtungsrahmen sind hinlänglich bekannt. Um nun solche Dichtungsrahmen auf einfache Weise halten zu können, kann jede Halteaufnahme mittels eines Steckabschnitts, auf dem eine offene Kammer eines Dichtungsrahmens aufsteckbar ist, begrenzt sein oder einen solchen aufweisen. D.h. zum noch besseren Fixieren wird ein Dichtungsrahmen mit seiner offenen Kammer auf diesen Steckabschnitt, der in die Kammer eingreift, aufgesteckt, so dass er optimal gegen ein Verrutschen gesichert ist.

Ferner sind Dichtungsrahmen beispielsweise für sogenannte no-frost-Geräte bekannt, die eine zum Rahmeninneren gerichtete Dichtlippe aufweisen. Die Dichtungsrahmen hängen beim Transportgestell des Standes der Technik mit ihrer Rahmeninnenseite auf dem jeweiligen Tragarm. Da die Dichtungslippe rahmeninnenseitig vorspringt, wird sie folglich verbogen, was es erfordert, dass die Dichtungslippe im Stoßbereich zweier rechtwinklig verbundener Rahmenabschnitte ausgeklinkt werden muss, d.h. die Dichtlippen der beiden Rahmenabschnitte sind hier nicht verbunden, um ein Einbiegen der Dichtungslippe zu ermöglichen. Seitens des Kühlmöbelherstellers muss die Dichtungslippe dann erst wieder neu positioniert werden. Um beim erfindungsgemäßen Transportgestell diesem Nachteil zu begegnen, kann erfindungsgemäß vorgesehen sein, dass eine Halteaufnahme derart geformt ist, dass ein eine nach innen gerichtete Dichtlippe aufweisender Dichtungsrahmen lediglich mit seinem Dichtkörper aufgelagert ist und die Dichtlippe im Wesentlichen unverformt in der Halteaufnahme aufgenommen ist. D.h. der Dichtungsrahmen ist über seinen Dichtkörper in der Halteaufnahme aufgelagert und abgestützt, nicht aber wie bisher über die Dichtlippe, die während des Transports überhaupt nicht verformt wird. Infolgedessen ist es bei Verwendung des erfindungsgemäßen Transportgestells auch nicht erforderlich, die Dichtlippe wie bisher auszuklinken.

Die Auflage kann querschnittlich gesehen im Wesentlichen eben sein, d.h. sie wird auf die Oberseite des Tragarms aufgesetzt. Alternativ dazu besteht auch die Möglichkeit, dass die Auflage querschnittlich im Wesentlichen U-förmig ist und den Tragarm an den beiden Seiten umgreift. Denkbar ist auch eine L-förmige Ausführung, bei welcher die Auflage den Tragarm lediglich an der Seite umgreift, an der auch tatsächlich ein Rahmenabschnitt des Dichtungsrahmens entlang läuft.

Die an einem Tragarm angeordnete Auflage selbst kann einstückig oder aus mehreren miteinander lösbar verbundenen und hintereinander angeordneten Auflageabschnitten bestehen. Diese können beispielsweise über Steckverbindungen oder Steck-Rast-Verbindungen miteinander verbunden oder verbindbar sein. Als Material zur Herstellung der Aufnahme kann beispielsweise Kunststoff verwendet werden. Denkbar sind aber auch Auflagen aus Metall oder Holz. Eine einstückige und aus Kunststoff bestehende Auflage ist aus herstellungstechnischer Sicht am zweckmäßigsten in einem Tiefziehverfahren herzustellen. Die modular miteinander verbindbaren Auflagenabschnitte, die es ermöglichen, beliebig lange Auflagen herzustellen, sind zweckmäßigerweise in einem Spritzgussverfahren hergestellt.

Während die fest angeordnete Auflage mittels Nietverbindungen oder einer Klebeverbindung fest am Tragarm angeordnet ist, kann die lösbare Auflage am einfachsten lediglich auf den Tragarm aufzulegen sein. Ein Verrutschen nach vorne wird dadurch vermieden, dass die Tragarme vorderseitig eine nach oben stehende Abkantung aufweisen, die die Auflage gegenlagert. Zweckmäßigerweise kann die Auflage aber auch mittels Schraubenverbindungen, mittels Steckverbindungen, mittels Steck-Rast-Verbindungen oder mittels Klemmverbindungen am Tragarm befestigt oder befestigbar sein. Zur Herstellung einer solchen Schraubenverbindung sind zweckmäßigerweise auflagenseitig Durchbrechungen zum Aufnehmen der Befestigungsschrauben vorgesehen, Entsprechendes gilt auch für Steckverbindungen, bei denen geeignete Steckverbinder einfach durch entsprechende auflagenseitige Durchbrechungen gesteckt werden. Für Steck-Rast-Verbindungen ist es denkbar, an der Auflage geeignete Rastelemente vorzusehen, die an entsprechenden tragarmseitigen Vorsprüngen oder dergleichen verrasten.
Denkbar ist beispielsweise bei einer U-förmigen Auflage an den freien Enden der beiden U-Schenkel Rastvorsprünge vorzusehen, die die unteren Enden des Tragarms rastend hintergreifen. Die einfachste Form einer Klemmverbindung bei einer U-förmigen Auflage besteht letztlich darin, die Schenkel etwas nach innen gerichtet zu formen, so dass sie zum Aufstecken auf den Tragarm etwas nach außen gebogen werden müssen, wodurch sich eine form- und kraftschlüssige Klemmung am Tragarm ergibt.

Neben dem Transportgestell betrifft die Erfindung ferner eine Auflage zur lösbaren Befestigung an einem Tragarm eines Transportgestells für aus Kunststoff bestehende Dichtungsrahmen insbesondere für Kühlmöbel. Diese Auflage zeichnet sich erfindungsgemäß dadurch aus, dass an der die Dichtungsrahmen aufnehmenden Seite der Auflage mehrere jeweils einen Dichtungsrahmen aufnehmende Halteaufnahmen zum Haltern der Dichtungsrahmen in einer voneinander beabstandeten Position vorgesehen sind. Die Halteaufnahmen können dabei als hintereinander angeordnete Eintiefungen, in die jeweils ein Dichtungsrahmen eingreift, ausgebildet sein, wobei zweckmäßigerweise die Aufnahmenquerschnittsformen in Abhängigkeit der Form des an oder in den aufzunehmenden Rahmenabschnitts eines Dichtungsrahmens geformt ist, d.h. es erfolgt eine rahmenspezifische Anpassung der Querschnittsform der Halteaufnahme.

Dabei kann jede Halteaufnahme mittels eines Steckabschnitts, auf den eine offene Kammer eine Dichtungsrahmens aufsteckbar ist, begrenzt sein oder einen solchen aufweisen. Diese Auflage dient insbesondere zum Transport für derartige offene Kammern, die zum Befestigen des Dichtungsrahmens am Kühlmöbel dienen, aufweisende Dichtungsrahmen. Zur Anpassung an eine andere spezielle Rahmenform, die eine nach innen gerichtete Dichtlippe aufweist, ist es zweckmäßig, wenn die Halteaufnahme derart geformt ist, dass ein solcher Dichtungsrahmen lediglich mit seinem Dichtungskörper aufgelagert ist und die Dichtlippe unverformt in der Halteaufnahme aufgenommen ist.

Neben einem im Wesentlichen ebenen und geraden Verlauf kann die Aufnahme auch querschnittlich im Wesentlichen U-förmig ausgebildet sein, sie kann ferner einstückig sein oder aus mehreren lösbar miteinander verbundenen und hintereinander angeordneten Auflageabschnitten bestehen, die zweckmäßigerweise mittels Steck- oder Steck-Rast-Verbindungen miteinander verbunden oder verbindbar sind. Als Materialien sind Kunststoff, Metall oder Holz denkbar. Eine einstückige und aus Kunststoff bestehende Auflage ist zweckmäßigerweise in einem Tiefziehverfahren hergestellt, die Auflagenabschnitte einer modularen Auflage sind zweckmäßigerweise in einem Spritzgussverfahren hergestellt.

Zur einfachen Befestigung der Auflage am Tragarm können auflageseitig Aufnahmen, insbesondere in Form von Durchbrechungen für Befestigungsmittel zum Befestigen der Auflage am Tragarm, vorgesehen sein. Durch diese Aufnahmen oder Durchbrechungen können beispielsweise Befestigungsschrauben oder Befestigungssteckbolzen oder dergleichen hindurchgreifen. Alternativ hierzu können Befestigungselemente zum Befestigen der Auflage mittels Steckverbindungen, mittels Steck-Rast-Verbindungen oder mittels Klemmverbindungen am Tragarm vorgesehen sei.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipskizze eines erfindungsgemäßen Transportgestells,
- Fig. 2: eine Schnittansicht einer erfindungsgemäßen Auflage einer ersten Ausführungsform,
- Fig. 3: eine Schnittansicht einer erfindungsgemäßen Auflage einer zweiten Ausführungsform,
- Fig. 4: eine Schnittansicht einer erfindungsgemäßen Auflage einer dritten Ausführungsform,
- Fig. 5: eine Schnittansicht einer erfindungsgemäßen Auflage einer vierten Ausführungsform,
- Fig. 6: eine Schnittansicht einer erfindungsgemäßen Auflage einer fünften Ausführungsform,
- Fig. 7: eine Aufsicht auf zwei lösbar miteinander verbindbare Auflagenabschnitte, und
- Fig. 8: eine Seitenansicht eines in Fig. 7 gezeigten Auflagenabschnitts.

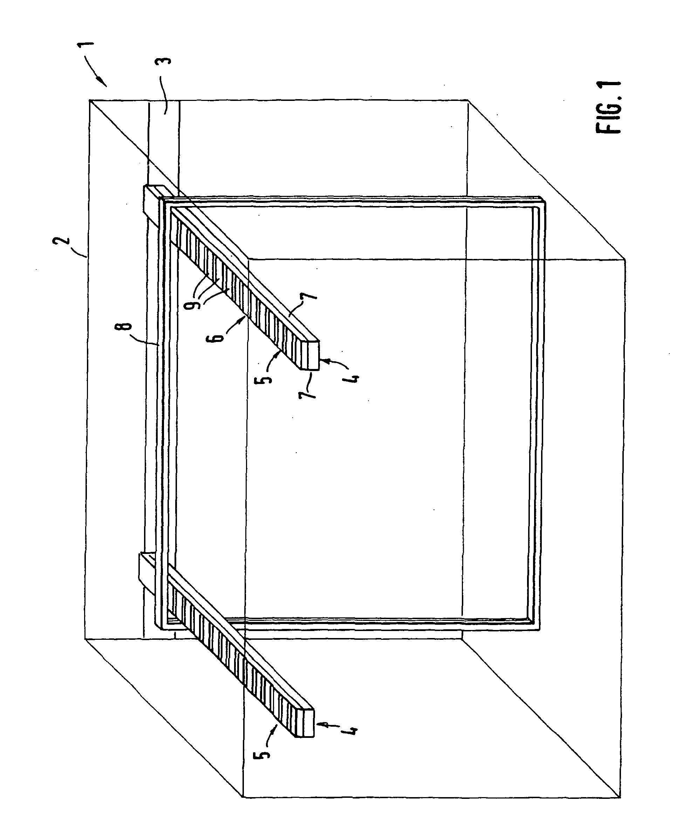

Fig. 1 zeigt in Form einer Prinzipskizze ein erfindungsgemäßes Transportgestell 1, bei dem lediglich die wesentlichen Komponenten gezeigt sind. Das Transportgestell 1 umfasst einen lediglich in Form eines Würfels gezeigten Gestellrahmen 2, an dem bodenseitig nicht näher gezeigte Transportrollen oder geeignete Eingriffe für Gabelstaplergabeln etc. vorgesehen sind. An einem gestellseitig vorgesehenen Träger 3 sind im gezeigten Beispiel zwei Tragarme 4 im Wesentlichen horizontal hervorstehend angeordnet. Auf diesen Tragarmen 4 ist im gezeigten Beispiel jeweils eine Auflage 5 angeordnet, wobei diese Auflage 5 ersichtlich querschnittlich im Wesentlichen U-förmig ist und einen oberen Auflagenbereich 6 und zwei seitliche Auflagenschenkel 7 besitzt. Die Auflage 5 weist an ihren einem Dichtungsrahmen 8, der auf sie aufgelegt wird, weisenden Seiten mehrere hintereinander angeordnete Halteaufnahmen 9 auf, in oder an denen ein Dichtungsrahmen 8 in nachfolgend noch beschriebener Weise lagestabil und gegen ein Verrutschen gesichert gehaltert ist. Die Dichtungsrahmen 8 können also hintereinander fortlaufend in die Halteaufnahme 9 eingehängt werden, bis sämtliche Halteaufnahmen 9 belegt sind.

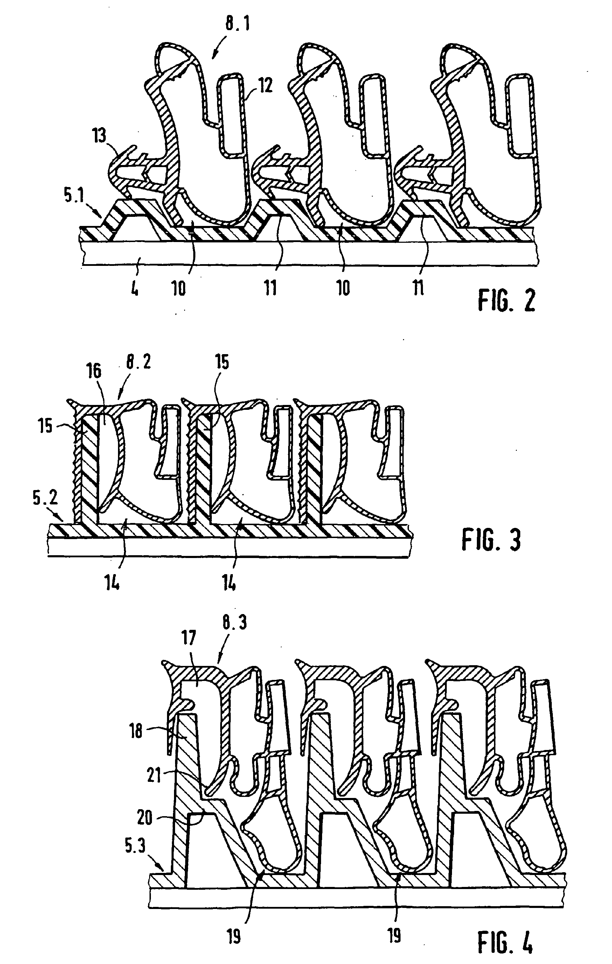

Fig. 2 zeigt eine erste erfindungsgemäße Ausführungsform einer Auflage 5.1 im Schnitt. Die Auflage 5.1 ist auf einem Tragarm 4 lösbar oder unlösbar angeordnet. Sie ist im Wesentlichen mäanderförmig profiliert, wobei die Halteaufnahmen mittels geeigneter Eintiefungen 10 gebildet sind, die über geeignete Erhöhungsabschnitte 11 voneinander getrennt sind.
In die Halteaufnahmen 10 sind im gezeigten Beispiel Dichtungsrahmen 8.1 eingelegt, wobei der Dichtungskörper 12 mit seinem unteren Abschnitt in der Halteaufnahme 10 ruht, während ein rahmenseitig umlaufender Rastvorsprung 13 auf einer Erhöhung 11 aufliegt. Aufgrund der Aufnahme des Dichtungsrahmens 8.1 in einer Halteaufnahme 10 ist er gegen ein Verrutschen nach vorne oder hinten gesichert, so dass die hintereinander angeordneten Dichtungsrahmen 8.1 nicht aneinander anstoßen und sich gegenseitig deformieren können.

Fig. 3 zeigt eine weitere erfindungsgemäße Ausführungsform einer Auflage 5.2. Hier sind die Halteaufnahmen 14 über wandartige Vorsprünge 15, die als Steckabschnitte dienen, voneinander getrennt. Im gezeigten Beispiel ist in jede Halteaufnahme 14 ein Dichtungsrahmen 8.2 eingebracht, der eine offene Kammer 16 aufweist. Mit dieser offenen Kammer 16 ist er auf den Steckabschnitt 15 aufgesteckt, worüber er gegen ein horizontales Verrutschen in Position gehaltert ist.

Fig. 4 zeigt eine ähnliche Ausführungsform einer Auflage 5.3, an der Dichtungsrahmen 8.3 aufgenommen sind. Die Dichtungsrahmen 8.3 sind anders in ihrer Querschnittsform als die Dichtungsrahmen 8.2, sie weisen jedoch ebenfalls eine offene Kammer 17 auf, die auf einen Steckabschnitt 18, der jede Halteaufnahme 19 begrenzt aufgesteckt ist. Die Querschnittsform der Halteaufnahme 19 zeigt, dass diese einen aufnahmeneigenen Absatz 20 aufweist, auf den eine vorspringende Zunge 21 des Dichtungsrahmens 8.3 aufliegt, d.h. der Dichtungsrahmen liegt nicht nur bodenseitig auf, sondern auch in diesem Bereich. Ersichtlich ist auch hier die Querschnittsform einer Halteaufnahme entsprechend dem aufzunehmenden Dichtungsrahmenprofil gewählt.

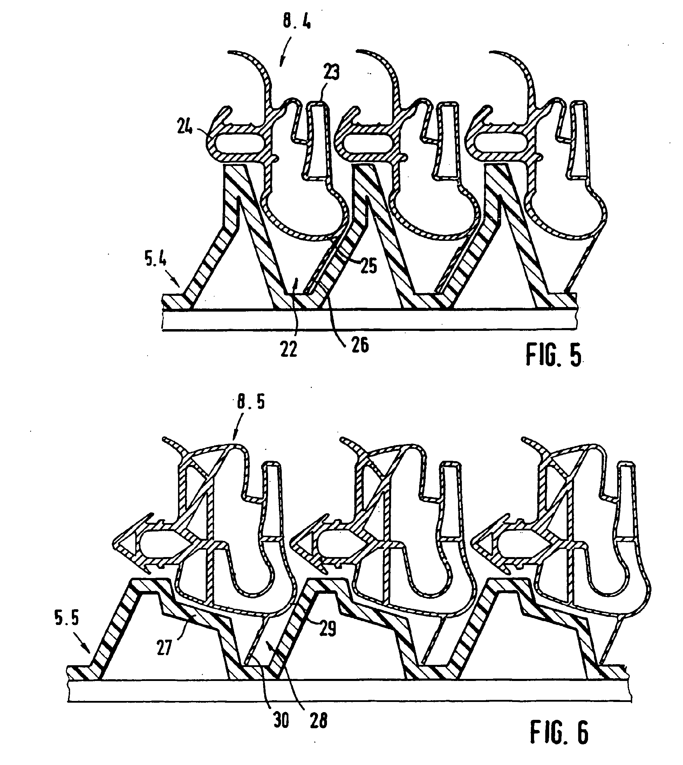

Fig. 5 zeigt eine weitere Ausführungsform einer Auflage 5.4 für einen Dichtungsrahmen 8.4. Eine Halteaufnahme 22 ist im Wesentlichen V-förmig profiliert. Sie ist dabei, bezogen auf die spezifische Form des Dichtungsrahmens 8.4, so geformt, dass der Dichtungsrahmen 8.4 mit seinem Dichtkörper 23 in oder an der Halteaufnahme wandseitig anliegt, im gezeigten Beispiel über den Haltevorsprung 24, mittels dem der Dichtungsrahmen 8.4 am Kühlmöbel befestigt wird, und im Bereich der Ausbuchtung 25 der Hauptkammer des Profils.
An diese Ausbuchtung 25 schließt sich eine nach innen vorspringende Dichtlippe 26 an, die ersichtlich im Wesentlichen parallel zu der Halteaufnahmenwand verläuft und mithin unverformt in der Halteaufnahme 22 aufgenommen ist.

Eine ähnliche auf die spezifische Querschnittsform eines Halterahmens 8.5 abgestellte Form einer Halteaufnahme bzw. einer Auflage 5.5 zeigt Fig. 6. Der Dichtungsrahmen 8.5 ist auch hier zum einen auf der Auflageschulter 27 der Halteaufnahme 28 aufgelagert, zum anderen im Bereich der rückseitigen Wölbung 29. Dies ermöglicht es, dass eine auch hier vorgesehene nach innen vorspringende Dichtlippe 30 im Wesentlichen unverformt in dem eingetieften Bereich der Halteaufnahme 28 aufgenommen ist.

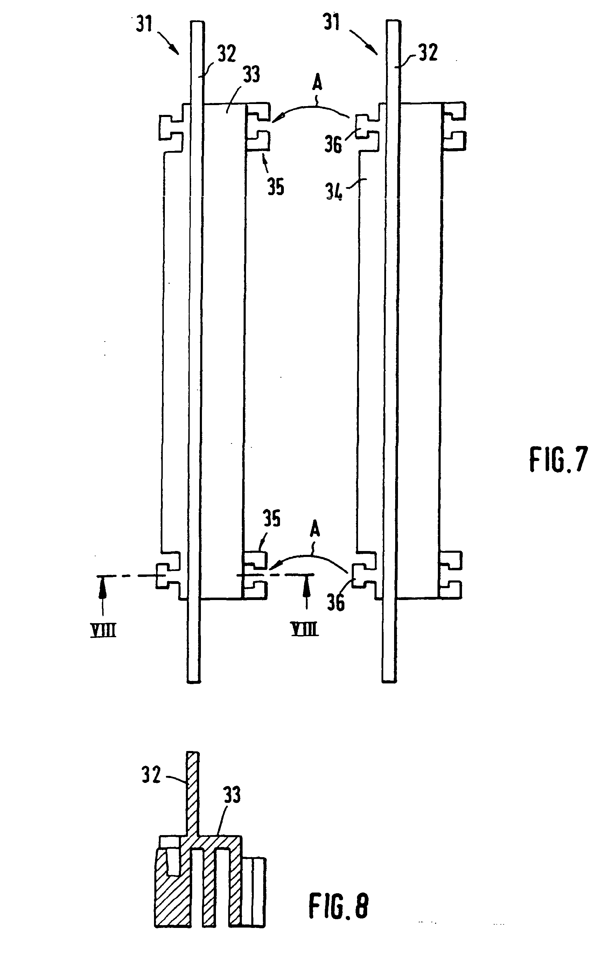

Fig. 7 zeigt schließlich zwei Auflageabschnitte 31, die - anders als die Auflagen gemäß den Figuren 2 - 6, die zweckmäßigerweise aus Kunststoff gefertigt sind und in einem Tiefziehverfahren hergestellt wurden - in einem Spritzgussverfahren gefertigt wurden. Jede Aufnahme besitzt - siehe Fig. 8 - einen nach oben abstehenden gegebenenfalls als Steckvorsprung dienenden Abschnitt 32, an dem sich ein die Halteaufnahme bildender Ansatz 33 anschließt. Dieser wird über einen entsprechenden Ansatz 34 eines benachbarten Auflagenabschnitts 31 ergänzt, wobei dieser Ansatz 34 von dem bereits benannten Vorsprung 32 begrenzt ist. Zum Verbinden der beiden lösbar miteinander verbindbaren Auflagenabschnitte 31 weist jeder Auflagenabschnitt 31 an einer Seite Steckaufnahmen 35 auf, in die entsprechend gegengleich profilierte Steckvorsprünge 36 des zu befestigenden Auflagenabschnitts eingreifen, wie durch die beiden Pfeile A dargestellt ist. Auf diese Weise können beliebig viele Auflagenabschnitte 31 hintereinander angeordnet werden, so dass in modularere Weise beliebig lange Auflagen gebildet werden können und man sich ohne Probleme an die konkrete Länge eines Tragarms anpassen kann. Natürlich besteht auch hier die Möglichkeit, die Form der Auflagenabschnitte 31 im oberen, die Halteaufnahme bildenden oder begrenzenden Bereich entsprechend der Form eines aufzunehmenden Dichtungsrahmens auszubilden.

## Patentansprüche

1. Transportgestell für aus Kunststoff bestehende Dichtungsrahmen insbesondere für Kühlmöbel, mit einem oder mehreren Tragarmen zum hängenden Aufnehmen der hintereinander anzuordnenden Dichtungsrahmen und der oder jeder Tragarm (2) eine Auflage (5, 5.1, 5.2, 5.3, 5.4, 5.5) aufweist, an deren den Dichtungsrahmen (8, 8.1,8.2, 8.3, 8.4, 8.5) zugewandten Seite mehrere jeweils einen Dichtungsrahmen (8, 8.1, 8.2, 8.3, 8.4, 8.5) aufnehmende Halteaufnahmen (6, 10, 14, 19, 22, 28) zum Haltern der Dichtungsrahmen (8, 8.1, 8.2, 8.3, 8.4, 8.5) in einer voneinander beabstandeten Position vorgesehen sind und die Auflage (5, 5.1, 5.2, 5.3, 5.4, 5.5) fest oder lösbar am Tragarm (2) angeordnet ist und die Halteaufnahmen (6, 10, 14, 19, 22, 28) als hintereinander angeordnete Eintiefungen ausgebildet sind, in die jeweils ein Dichtungsrahmen (8, 8.1, 8.2, 8.3, 8.4, 8.5) eingreift, **gekennzeichnet durch** folgende Merkmale
-a- die Halteaufnahmen (6, 10, 14, 19, 22, 28) in ihrer Querschnittsform in Abhängigkeit der Form des an oder in ihr aufzunehmenden Rahmenabschnitts eines aufzunehmenden Dichtungsrahmens (8, 8.1, 8.2, 8.3, 8.4, 8.5) geformt ist,
-b- eine Halteaufnahme (22, 28) derart geformt ist, dass ein eine nach innen gerichtete Dichtlippe (26, 30) aufweisender Dichtungsrahmen (8.4, 8.5) mit seinem Dichtungskörper aufgelagert ist und die Dichtlippe (26,30) im Wesentlichen unverformt in der Halteaufnahme (22, 28) aufgenommen ist,
-c- eine Auflage (5, 5.1, 5.2, 5.3, 5.4, 5.5) im Querschnitt im Wesentlichen U-förmig ist und eine an einem Tragarm angeordnete Auflage (5, 5.1, 5.2, 5.3, 5.4, 5.5) aus mehreren miteinander lösbar verbundenen und hintereinander angeordneten Auflageabschnitten (31) besteht und
-d- die Auflageabschnitte (31) mittels Steckverbindungen (35, 36) oder Steck-Rast-Verbindungen miteinander verbunden oder verbindbar sind.

2. Transportgestell nach Anspruch 1, **dadurch gekennzeichnet, dass** jede Halteaufnahme (14, 19) mittels eines Steckabschnitts (15, 18), auf den eine offene Kammer (16, 17) eines Dichtungsrahmens (8.2, 8.3) aufsteckbar ist, begrenzt ist oder einen solchen aufweist.

3. Transportgestell nach Anspruch 1 oder 2, **dadurch gekennzeichnet, dass** die Auflage (5, 5.1, 5.2, 5.3, 5.4, 5.5) oder die Auflagenabschnitte (31) aus Kunststoff, aus Metall oder aus Holz ist.

4. Transportgestell nach Anspruch 3, **dadurch gekennzeichnet, dass** die Auflageabschnitte (31) in einem Spritzgussverfahren hergestellt sind.

5. Transportgestell nach einem der Ansprüche 1 bis 4, **dadurch gekennzeichnet, dass** die fest angeordnete Auflage (5, 5.1, 5.2, 5.3, 5.4, 5.5) mittels Nietverbindung oder einer Klebeverbindung am Tragarm (2) befestigt ist.

6. Transportgestell nach einem der Ansprüche 1 bis 4, **dadurch gekennzeichnet, dass** die lösbar angeordnete Auflage (5, 5.1, 5.2, 5.3, 5.4, 5.5) mittels Schraubenverbindungen, mittels Steckverbindungen, mittels Steck-Rast-Verbindungen oder mittels Klemmverbindungen am Tragarm (2) befestigt oder befestigbar sind.

7. Auflage zur festen oder lösbaren Befestigung an einem Tragarm eines Transportgestells für aus Kunststoff bestehende Dichtungsrahmen insbesondere für Kühlmöbel, wobei an der die Dichtungsrahmen (8, 8.1, 8.2, 8.3, 8.4, 8.5) aufnehmenden Seite der Auflage mehrere jeweils einen Dichtungsrahmen (8, 8.1, 8.2, 8.3, 8.4, 8.5) aufnehmende Halteaufnahmen (6, 10, 14, 19, 22, 28) zum Haltern der Dichtungsrahmen in einer voneinander beabstandeten Position vorgesehen sind und die Halteaufnahmen (6, 10, 14, 19, 22, 28) als hintereinander angeordnete Eintiefungen, in die jeweils ein Dichtungsrahmen (8, 8.1, 8.2, 8.3, 8.4, 8.5) eingreift, ausgebildet sind, **dadurch gekennzeichnet, dass**
- die Halteaufnahmen (6, 10, 14, 19, 22, 28) in ihrer Querschnittsform in Abhängigkeit der Form des an oder in ihr aufzunehmenden Rahmenabschnitts eines aufzunehmenden Dichtungsrahmens (8, 8.1, 8.2, 8.3, 8.4, 8.5) geformt ist,
- eine Halteaufnahme (22, 28) derart geformt ist, dass ein eine nach innen gerichtete Dichtlippe (26, 30) aufweisender Dichtungsrahmen (8.4, 8.5) mit seinem Dichtungskörper aufgelagert und die Dichtlippe (26,30) im Wesentlichen unverformt in der Halteaufnahme (22, 28) aufgenommen werden kann,
- die Auflage (5, 5.1, 5.2, 5.3, 5.4, 5.5) im Querschnitt im Wesentlichen U-förmig ist und eine an einem Tragarm angeordnete Auflage (5, 5.1, 5.2, 5.3, 5.4, 5.5) aus mehreren miteinander lösbar verbundenen und hintereinander angeordneten Auflageabschnitten (31) besteht und
- die Auflageabschnitte (31) mittels Steckverbindungen (35, 36) oder Steck-Rast-Verbindungen miteinander verbunden oder verbindbar sind.

8. Auflage nach Anspruch 7, **dadurch gekennzeichnet, dass** jede Halteaufnahme (14, 19) mittels eines Steckabschnitts (15, 18), auf den eine offene Kammer (16, 17) eines Dichtungsrahmens (8.2, 8.3) aufsteckbar ist, begrenzt ist oder einen solchen aufweist.

9. Auflage nach einem der Ansprüche 7 oder 8, **dadurch gekennzeichnet, dass** sie aus Kunststoff, aus Metall oder aus Holz ist.

10. Auflage nach Anspruch 9, **dadurch gekennzeichnet, dass** die Auflageabschnitte in einem Spritzgußverfahren hergestellt sind.

11. Auflage nach einem der Ansprüche 7 bis 10, **dadurch gekennzeichnet, dass** Aufnahmen, insbesondere in Form von Durchbrechungen für Befestigungsmittel zum Befestigen der Auflage an einem Tragarm vorgesehen sind.

12. Auflage nach einem der Ansprüche 7 bis 11, **dadurch gekennzeichnet, dass** Befestigungselemente zum Befestigen der Auflage mittels Steckverbindungen, mittels Steck-Rast-Verbindungen oder mittels Klemmverbindungen am Tragarm vorgesehen sind.

## Claims

1. Shipping crate for sealing frames made of plastic in particular for household refrigerators, with one or more carrying arms for receiving in a hanging manner the sealing frames to be arranged one behind another, where the or each carrying arm (2) has a support (5, 5.1, 5.2, 5.3, 5.4, 5.5), on the side of which facing the sealing frames (8, 8.1, 8.2, 8.3, 8.4, 8.5) a number of holding receivers (6, 10, 14, 19, 22, 28), in each case receiving a sealing frame (8, 8.1, 8.2, 8.3, 8.4, 8.5), are provided for retaining the sealing frames (8, 8.1, 8.2, 8.3, 8.4, 8.5) in a position spaced from one another, and the support (5, 5.1, 5.2, 5.3, 5.4, 5.5) is arranged in a fixed or detachable manner on the carrying arm (2), and the holding receivers (6, 10, 14, 19, 22, 28) are designed as recesses arranged one behind another in which in each case a sealing frame (8, 8.1, 8.2, 8.3, 8.4, 8.5) engages, **characterized by** the following features
-a- the holding receivers (6, 10, 14, 19, 22, 28) are shaped in their cross-sectional shape depending on the shape of the frame portion to be received thereon or therein of a sealing frame (8, 8.1, 8.2, 8.3, 8.4, 8.5) to be received,
-b- a holding receiver (22, 28) is shaped in such a way that a sealing frame (8.4, 8.5) having an inwardly directed sealing lip (26, 30) is supported with its sealing body and the sealing lip (26, 30) is received in an essentially undeformed manner in the holding receiver (22, 28),
-c- a support (5, 5.1, 5.2, 5.3, 5.4, 5.5) is essentially U-shaped in cross section and a support (5, 5.1, 5.2, 5.3, 5.4, 5.5) arranged on a carrying arm consists of a number of detachably interconnected support portions (31) arranged one behind another and
-d- the support portions (31) are or can be interconnected by means of insertion connections (35, 36) or insertion/catch connections.

2. Shipping crate according to Claim 1, **characterized in that** each holding receiver (14, 19) is delimited by means of an insertion portion (15, 18), onto which an open chamber (16, 17) of a sealing frame (8.2, 8.3) can be slipped, or has such a portion.

3. Shipping crate according to Claim 1 or 2, **characterized in that** the support (5, 5.1, 5.2, 5.3, 5.4, 5.5) or the support portions (31) is or are made of plastic, of metal or of wood.

4. Shipping crate according to Claim 3, **characterized in that** the support portions (31) are manufactured by injection moulding.

5. Shipping crate according to one of Claims 1 to 4, **characterized in that** the support (5, 5.1, 5.2, 5.3, 5.4, 5.5) arranged in a fixed manner is fastened to the carrying arm (2) by means of a riveted connection or an adhesive connection.

6. Shipping crate according to one of Claims 1 to 4, **characterized in that** the detachably arranged support (5, 5.1, 5.2, 5.3, 5.4, 5.5) is or can be fastened to the carrying arm (2) by means of screw connections, by means of insertion connections, by means of insertion/catch connections or by means of clamping connections.

7. Support for fixed or detachable fastening to a carrying arm of a shipping crate for sealing frames made of plastic in particular for household refrigerators, a number of holding receivers (6, 10,14, 19, 22, 28), in each case receiving a sealing frame (8, 8.1, 8.2, 8.3, 8.4, 8.5), being provided on the side of the support receiving the sealing frames (8, 8.1, 8.2, 8.3, 8.4, 8.5) for retaining the sealing frames in a position spaced from one another, and the holding receivers (6, 10, 14, 19, 22, 28) being designed as recesses arranged one behind another in which in each case a sealing frame (8, 8.1, 8.2, 8.3, 8.4, 8.5) engages, **characterized in that**
- - the holding receivers (6, 10, 14, 19, 22, 28) are shaped in their cross-sectional shape depending on the shape of the frame portion to be received thereon or therein of a sealing frame (8, 8.1, 8.2, 8.3, 8.4, 8.5) to be received,
- - a holding receiver (22, 28) is shaped in such a way that a sealing frame (8.4, 8.5) having an inwardly directed sealing lip (26, 30) is supported with its sealing body and the sealing lip (26, 30) can be received in an essentially undeformed manner in the holding receiver (22, 28),
- - the support (5, 5.1, 5.2, 5.3, 5.4, 5.5) is essentially U-shaped in cross section and a support (5, 5.1, 5.2, 5.3, 5.4, 5.5) arranged on a carrying arm consists of a number of detachably interconnected support portions (31) arranged one behind another and
- - the support portions (31) are or can be interconnected by means of insertion connections (35, 36) or insertion/catch connections.

8. Support according to Claim 7, **characterized in that** each holding receiver (14, 19) is delimited by means of an insertion portion (15, 18), onto which an open chamber (16, 17) of a sealing frame (8.2, 8.3) can be slipped, or has such a portion.

9. Support according to one of Claims 7 or 8, **characterized in that** it is made of plastic, of metal or of wood.

10. Support according to Claim 9, **characterized in that** the support portions are manufactured by injection moulding.

11. Support according to one of Claims 7 to 10, **characterized in that** receivers are provided, in particular in the form of openings for fastening means for fastening the support to a carrying arm.

12. Support according to one of Claims 7 to 11, **characterized in that** fastening elements are provided for fastening the support to the carrying arm by means of insertion connections, by means of insertion/catch connections or by means of clamping connections.

## Revendications

1. Châssis de transport pour cadres d'étanchéité composés de matière plastique, notamment pour meubles réfrigérants, comportant un ou plusieurs bras porteurs pour recevoir en suspension les cadres d'étanchéité à disposer les uns derrière les autres et dans lequel le ou chaque bras porteur (2) présente un support (5, 5.1, 5.2, 5.3, 5.4, 5.5) sur lequel il est prévu, sur son côté tourné vers les cadres d'étanchéité (8, 8.1, 8.2, 8.3, 8.4, 8.5), plusieurs supports de retenue (6, 10, 14, 19, 22, 28) recevant respectivement un cadre d'étanchéité (8, 8.1, 8.2, 8.3, 8.4, 8.5) pour retenir les cadres d'étanchéité (8, 8.1, 8.2, 8.3, 8.4, 8.5) dans une position d'écartement mutuel et le support (5, 5.1, 5.2, 5.3, 5.4, 5.5) est disposé de manière fixe ou dissociable sur le bras porteur (2) et les supports de retenue (6, 10, 14, 19, 22, 28) sont réalisés sous forme de renfoncements disposés les uns derrière les autres dans lesquels s'engrène respectivement un cadre d'étanchéité (8, 8.1, 8.2, 8.3, 8.4, 8.5), **caractérisé par** les caractéristiques suivantes:
-a- les supports de retenue (6, 10, 14, 19, 22, 28) sont mise en forme dans leur forme de section transversale en fonction de la forme de la section de cadre, à recevoir sur ou à l'intérieur de ceux-ci, d'un cadre d'étanchéité (8, 8.1, 8.2, 8.3, 8.4, 8.5) à recevoir,
-b- un support de retenue (22, 28) est mise en forme de manière à ce qu'un cadre d'étanchéité (8.4, 8.5) présentant une lèvre d'étanchéité (26, 30) dirigée vers l'intérieur s'appuie par son corps d'étanchéité et à ce que la lèvre d'étanchéité (26, 30) soit reçue sensiblement sans déformation dans le support de retenue (22, 28),
-c- un support (5, 5.1, 5.2, 5.3, 5.4, 5.5) a une section transversale sensiblement en forme de U et un support (5, 5.1, 5.2, 5.3, 5.4, 5.5) disposé sur un bras porteur est composé de plusieurs sections d'appui (31) reliées entre elles de manière dissociable et disposées les unes derrière les autres et
-d- les sections d'appui (31) sont reliées ou peuvent être reliées entre elles par des raccordements par fichage (35, 36) ou des raccordements par fichage et enclenchement.

2. Châssis de transport selon la revendication 1, **caractérisé en ce que** chaque support de retenue (14, 19) sur lequel une chambre ouverte (16, 17) d'un cadre d'étanchéité (8.2, 8.3) peut être fichée est limité au moyen d'une section de fichage (15, 18) ou présente une telle section.

3. Châssis de transport selon la revendication 1 ou 2, **caractérisé en ce que** le support (5, 5.1, 5.2, 5.3, 5.4, 5.5) ou les sections d'appui (31) sont en matière plastique, en métal ou en bois.

4. Châssis de transport selon la revendication 3, **caractérisé en ce que** les sections d'appui (31) sont fabriquées par procédé de moulage par injection.

5. Châssis de transport selon l'une quelconque des revendications 1 à 4, **caractérisé en ce que** le support disposé fixement (5, 5.1, 5.2, 5.3, 5.4, 5.5) est fixé par raccordement par rivetage ou raccordement par collage au bras porteur (2).

6. Châssis de transport selon l'une quelconque des revendications 1 à 4, **caractérisé en ce que** le support disposé de manière dissociable (5, 5.1, 5.2, 5.3, 5.4, 5.5) est fixé ou peut être fixé par des raccordements à vis, par des raccordements par fichage, par des raccordements par fichage et enclenchement ou par des raccordements par serrage au bras porteur (2).

7. Support pour la fixation fixe ou dissociable sur un bras porteur d'un châssis de transport pour des cadres d'étanchéité composés de matière plastique, notamment pour meubles réfrigérants, dans lequel, sur le côté recevant les cadres d'étanchéité (8, 8.1, 8.2, 8.3, 8.4, 8.5) du support, il est prévu plusieurs supports de retenue (6, 10, 14, 19, 22, 28) recevant respectivement un cadre d'étanchéité (8, 8.1, 8.2, 8.3, 8.4, 8.5) pour retenir les cadres d'étanchéité dans une position d'écartement mutuel et les supports de retenue (6, 10, 14, 19, 22, 28) sont réalisés sous forme de renfoncements disposés les uns derrière les autres dans lesquels s'engrène respectivement un cadre d'étanchéité (8, 8.1, 8.2, 8.3, 8.4, 8.5), **caractérisé en ce que**
- les supports de retenue (6, 10, 14, 19, 22, 28) sont mise en forme dans leur forme de section transversale en fonction de la forme de la section de cadre, à recevoir sur ou à l'intérieur de ceux-ci, d'un cadre d'étanchéité (8, 8.1, 8.2, 8.3, 8.4, 8.5) à recevoir,
- un support de retenue (22, 28) est mise en forme de manière à ce qu'un cadre d'étanchéité (8.4, 8.5) présentant une lèvre d'étanchéité (26, 30) dirigée vers l'intérieur s'appuie par son corps d'étanchéité et à ce que la lèvre d'étanchéité (26, 30) puisse être reçue sensiblement sans déformation dans le support de retenue (22, 28),
- le support (5, 5.1, 5.2, 5.3, 5.4, 5.5) a une section transversale sensiblement en forme de U et qu'un support (5, 5.1, 5.2, 5.3, 5.4, 5.5) disposé sur un bras porteur est composé de plusieurs sections d'appui (31) reliées entre elles de manière dissociable et disposées les unes derrière les autres et que
- les sections d'appui (31) sont reliées ou peuvent être reliées entre elles par des raccordements par fichage (35, 36) ou des raccordements par fichage et enclenchement.

8. Support selon la revendication 7, **caractérisé en ce que** chaque support de retenue (14, 19) sur lequel peut être fichée une chambre ouverte (16, 17) d'un cadre d'étanchéité (8.2, 8.3) est limité au moyen d'une section de fichage (15, 18) ou présente une telle section.

9. Support selon l'une quelconque des revendications 7 ou 8, **caractérisé en ce qu'**il est composé de matière plastique, de métal ou de bois.

10. Support selon la revendication 9, **caractérisé en ce que** les sections d'appui sont fabriquées par procédé de moulage par injection.

11. Support selon l'une quelconque des revendications 7 à 10, **caractérisé en ce qu'**il est prévu des supports, notamment sous la forme de percées, pour des moyens de fixation servant à fixer le support à un bras porteur.

12. Support selon l'une quelconque des revendications 7 à 11, **caractérisé en ce qu'**il est prévu des éléments de fixation pour la fixation du support au moyen de raccordements par fichage, au moyen de raccordements par fichage et enclenchement ou au moyen de raccordements par serrage sur le bras porteur.
